# EUROPEAN PATENT APPLICATION

(11) **EP 4 664 574 A1**
(43) Date of publication of application: **17.12.2025**
(21) Application number: 24869675.9
(22) Date of filing: 16.04.2024
(51) Int. Cl.: H01M 10/04

(54) **ASSEMBLY METHOD AND ASSEMBLY APPARATUS**

(30) Priority: 25.09.2023 CN 202311244465
(71) Applicant: Contemporary Amperex Technology Co., Limited, Ningde, Fujian 352100 (CN)
(72) Inventor: WU, Kai, Ningde, Fujian 352100 (CN); HUANG, Biao, Ningde, Fujian 352100 (CN); YU, Mingxi, Ningde, Fujian 352100 (CN)
(74) Representative: Gong, Jinping
(86) International application number: PCT/CN2024/088103
(87) International publication number: WO 2025/066106

(57) **Abstract**

An assembly method and an assembly apparatus. The assembly method is used for assembling a battery unit; the battery unit comprises a housing and a plurality of battery cell assemblies connected in series and/or in parallel and accommodated in the housing; each battery cell assembly comprises an active substance coating part and a conductive part; the conductive part is located at one end of the battery cell assembly in the first direction and is used for electrically connecting the active substance coating part and an electrode post of the battery unit; the assembly method comprises the following steps: stacking the plurality of battery cell assemblies in a second direction, the second direction being perpendicular to the first direction; electrically connecting the conductive pats of the plurality of battery cell assemblies; and placing the plurality of battery cell assemblies into the housing.

## Description

### CROSS-REFERENCE TO RELATED APPLICATION

The present application is presented based on Chinese Patent Application No. 202311244465.7 filed on September 25, 2023, and claims the priority to the Chinese Patent Application described above, the content of which is incorporated herein by reference in its entirety.

### TECHNICAL FIELD

The present application relates to the technical field of battery assembly, and in particular, to an assembly method and an assembly device.

### BACKGROUND

In recent years, new energy vehicles have developed by leaps and bounds. In the field of electric vehicles, batteries, as the power source of electric vehicles, play an irreplaceable and important role. Typically, a battery includes a plurality of battery cells. Currently, the assembly process of the battery cells is cumbersome, resulting in low assembly efficiency.

### SUMMARY

The present application provides an assembly method and an assembly device, which are beneficial to simplifying the assembly process of a battery cell, improving the assembly efficiency, and reducing areas occupied by a plurality of cell assemblies during the battery cell assembly process, thereby reducing the risk of tension on the conductive portions during assembly and transportation.

In a first aspect, embodiments of the present application provide an assembly method for assembling a battery cell. The battery cell includes a housing body and a plurality of cell assemblies accommodated in the housing body and connected in series and/or in parallel, each of the cell assemblies includes an active substance-coated portion and a conductive portion, and the conductive portion is located at one end of the cell assembly in a first direction and is configured to electrically connect the active substance-coated portion to a terminal post of the battery cell. The assembly method includes: stacking the plurality of cell assemblies in a second direction, the second direction being perpendicular to the first direction; electrically connecting the conductive portions of the plurality of cell assemblies; and placing the plurality of cell assemblies into the housing body.

In the above technical solution, the electrical connection operation of the plurality of cell assemblies is performed when the plurality of cell assemblies remain stacked in the second direction, such that the plurality of cell assemblies occupy a small area during the above operation, which facilitates the conveyance of the plurality of cell assemblies in a stacked state on a logistics line. When the second direction is an up-down direction, the lowermost cell assembly of the plurality of cell assemblies is in contact with the logistics line, so as to reduce the risk of relative movement among the plurality of cell assemblies. Therefore, after the conductive portions of the plurality of cell assemblies are electrically connected, and when the plurality of cell assemblies are conveyed on the logistics line, the risk of tension on the interconnected conductive portions of the plurality of cell assemblies can be effectively reduced, thereby decreasing the risk of cracking in the conductive portions and improving the reliability of the plurality of cell assemblies. Moreover, during the electrical connection and housing insertion operations of the plurality of cell assemblies, corresponding operations are performed while the plurality of cell assemblies are maintained in the stacked state in the second direction, such that the relative postures of the plurality of cell assemblies before the plurality of cell assemblies are placed into the housing body are consistent with the relative postures of the plurality of cell assemblies after the plurality of cell assemblies are placed into the housing body. Therefore, during the assembly process of the battery cell, the need for adjusting the relative placement postures of the plurality of cell assemblies before and after insertion into the housing body may be avoided, thereby simplifying the assembly procedure of the battery cell.

In some embodiments, the cell assembly has a plurality of side walls, and the side wall with the largest area in the plurality of side walls is a first side wall; and stacking the plurality of cell assemblies in the second direction includes: disposing the first side walls of two adjacent cell assemblies back-to-back and/or face-to-face in the second direction.

In the above technical solution, the first side walls of the two cell assemblies are disposed back-to-back and/or face-to-face in the second direction, which enhances the stacking stability of the plurality of cell assemblies in the second direction, and facilitates the conveyance of the plurality of cell assemblies on the logistics line while maintaining the above stacked posture, thereby improving production efficiency.

In some embodiments, electrically connecting the conductive portions of the plurality of cell assemblies includes: converging a plurality of tabs of the conductive portions of the plurality of cell assemblies, such that parts of the plurality of tabs proximal to the active substance-coated portion converge to form a first gathering portion, and parts of the plurality of tabs distal to the active substance-coated portion converge to form a second gathering portion; and pre-connecting the second gathering portion.

In the above technical solution, the tabs of the plurality of cell assemblies are first converged to form a first gathering portion and a second gathering portion, thereby enabling the shaping of the plurality of tabs. Subsequent operations on the first gathering portion and the second gathering portion enable corresponding operations on the plurality of tabs, which is beneficial to improving assembly efficiency. Meanwhile, by pre-connecting the second gathering portion, the second gathering portion is formed as an integrated structure, thereby reducing interlayer gaps among the plurality of tabs in the second gathering portion. For example, the plurality of tabs are enabled to form a plate-like structure with certain rigidity, thereby enabling a direct or indirect electrical connection between the second gathering portion and the terminal post, and facilitating subsequent operations.

In some embodiments, after pre-connecting the second gathering portion and before placing the plurality of cell assemblies into the housing body, the assembly method further includes: disposing the second gathering portion to pass through a clearance hole formed in a support, such that at least a part of the second gathering portion extends to a side of the support distal to the active substance-coated portion, and enclosing, by the support, outer peripheral sides of the plurality of cell assemblies.

In the above technical solution, by arranging a support, the second gathering portion extends, through the clearance hole, to a side of the support distal to the active substance-coated portion, such that the arrangement of the support does not affect the electrical connection between the second gathering portion and the corresponding terminal post. Meanwhile, the support may enclose the outer peripheral walls of the plurality of active substance-coated portions to provide a certain limiting effect on the plurality of active substance-coated portions, thereby facilitating subsequent housing insertion operations. In addition, the support may be inserted into the housing body prior to the active substance-coated portions, such that the support can provide a certain protective effect on the active substance-coated portions, thereby reducing the risk of the housing body scratching the active substance-coated portions. Additionally, the clearance hole formed in the support can impose a certain degree of constraint on the second gathering portion, thereby enhancing the stability of the second gathering portion and the first gathering portion in maintaining their gathered states, providing certain support and shaping effects on the conductive portions, and reducing the risk of cracking in the first gathering portion and the second gathering portion. Furthermore, the active substance-coated portions can be isolated from the housing body, so as to reduce the risk of short-circuit connection between the conductive portions and the active substance-coated portions, and enhance the reliability of the battery cell.

In some embodiments, the conductive portion further includes an adapting piece, and after pre-connecting the second gathering portion and before placing the plurality of cell assemblies into the housing body, the assembly method further includes: fixedly connecting the adapting piece to the second gathering portion, and disposing the adapting piece and the second gathering portion to pass through a clearance hole formed in a support, such that at least a part of the second gathering portion and the adapting piece extend to a side of the support distal to the active substance-coated portion, and enclosing, by the support, outer peripheral sides of the plurality of cell assemblies; or disposing the second gathering portion to pass through a clearance hole formed in the support, such that at least a part of the second gathering portion extends to a side of the support distal to the active substance-coated portion, and enclosing, by the support, outer peripheral sides of the plurality of cell assemblies, and fixing the adapting piece to the at least a part of the second gathering portion.

In the above technical solution, by arranging a support, the second gathering portion extends, through the clearance hole, to a side of the support distal to the active substance-coated portion, such that the arrangement of the support does not affect the electrical connection between the adapting piece and the corresponding terminal post. Meanwhile, the support may enclose the outer peripheral walls of the plurality of active substance-coated portions to provide a certain limiting effect on the plurality of active substance-coated portions, thereby facilitating subsequent housing insertion operations. In addition, the support may be inserted into the housing body prior to the active substance-coated portions, such that the support can provide a certain protective effect on the active substance-coated portions, thereby reducing the risk of the housing body scratching the active substance-coated portions. Additionally, the clearance hole formed in the support can impose a certain degree of constraint on the second gathering portion, thereby enhancing the stability of the second gathering portion and the first gathering portion in maintaining their gathered states, providing certain support and shaping effects on the conductive portions, and reducing the risk of cracking in the first gathering portion and the second gathering portion. Furthermore, the active substance-coated portions can be isolated from the housing body, so as to reduce the risk of short-circuit connection between the conductive portions and the active substance-coated portions, and enhance the reliability of the battery cell.

In some embodiments, before placing the plurality of cell assemblies into the housing body, the assembly method further includes: wrapping the active substance-coated portion with an insulator, and connecting the insulating member to the support.

In the above technical solution, in one aspect, by wrapping the active substance-coated portion with the insulating member, the insulation reliability between the active substance-coated portion and the housing body can be improved, the corrosion of the housing body caused by the contact between the active substance-coated portion and the housing body can be reduced or prevented, and the leakage of the electrolyte caused by the corrosion of the housing body can be reduced, thereby improving the reliability of the battery cell. In another aspect, connecting the insulating member to the support can reduce the difficulty of fixing the insulating member and improve the reliability of the insulating member wrapped outside the active substance-coated portion. In still another aspect, the insulating member and the support can substantially enclose the plurality of cell assemblies, such that the risk of the cell assemblies being scratched by the housing body can be further reduced during subsequent housing insertion operations, thereby enhancing the reliability of the battery cell.

In some embodiments, after placing the plurality of cell assemblies into the housing body, the assembly method further includes: fixedly disposing a housing cover to an open end of the housing body, such that the housing cover seals the open end of the housing body; and fixedly connecting the conductive portions to the terminal post.

In the above technical solution, the housing cover is fixedly disposed at the open end of the housing body to seal the plurality of cell assemblies within an accommodating cavity defined by the housing body and the housing cover, thereby achieving reliable encapsulation of the plurality of cell assemblies. The conductive portions are fixedly connected to the terminal post to achieve an electrical connection between the conductive portions and the terminal post, thereby enabling normal charging and discharging of the battery cell.

In some embodiments, an accommodating groove is formed in the terminal post, an opening of the accommodating groove is formed on a surface of a side of the terminal post distal to the cell assembly, and a through hole is formed on a wall of the accommodating groove adjacent to the cell assembly. The assembly method includes: assembling and fixing the terminal post to the housing body; and disposing the conductive portions to pass through the through hole.

In the above technical solution, the terminal post may be first assembled and fixed to the housing body, and then the conductive portions may be disposed to pass through the through hole, so as to facilitate the assembly of the housing body, the terminal post, and the cell assemblies, thereby improving assembly efficiency. Moreover, after disposing the conductive portions to pass through the through hole, the conductive portions are then fixed to the terminal post, such that a part of the conductive portions can be accommodated in the accommodating groove. The arrangement of the accommodating groove, in one aspect, can reduce the weight of the terminal post, which is beneficial to increasing the gravimetric energy density of the battery cell, and in another aspect, can accommodate a part of the conductive portions, such that the accommodation and arrangement of the conductive portions can be facilitated through the opening of the accommodating groove, and the operation of fixedly connecting the conductive portions to the terminal post can be facilitated through the opening of the accommodating groove, thereby reducing assembly difficulty.

In some embodiments, after fixedly connecting the conductive portions and the terminal post, the assembly method further includes: fixedly disposing the cover plate at the opening of the accommodating groove, such that the cover plate seals the opening of the accommodating groove.

In the above technical solution, the cover plate seals the opening of the accommodating groove, such that the leakage of the electrolyte in the housing body from the opening of the accommodating groove can be prevented. In addition, when the cover plate is electrically connected to the terminal post, the cover plate can be used to achieve an indirect electrical connection between the terminal post and the busbar, which is beneficial to increasing the connection area of the electrical connection position, thereby reducing the resistance at the electrical connection position.

In a second aspect, the embodiments of the present application provide an assembly device for assembling a battery cell. The battery cell includes a housing body and a plurality of cell assemblies accommodated in the housing and connected in series and/or in parallel, each of the cell assemblies includes an active substance-coated portion and a conductive portion, and the conductive portion is located at one end of the cell assembly in a first direction and is configured to electrically connect the active substance-coated portion to a terminal post of the battery cell. The assembly device includes: a stacking tool, configured to stack the plurality of cell assemblies in a second direction, the second direction being perpendicular to the first direction; a first fixing tool, configured to fixedly connect the conductive portions of the plurality of cell assemblies; and a housing insertion tool, configured to place the plurality of cell assemblies into the housing body.

In the above technical solution, by arranging the stacking tool to stack the plurality of cell assemblies in the second direction, the occupied area of the plurality of cell assemblies in subsequent conveyance and operation processes is reduced. When the second direction is an up-down direction, the lowermost cell assembly of the plurality of cell assemblies is in contact with the logistics line, so as to reduce the risk of relative movement among the plurality of cell assemblies. Therefore, after the conductive portions of the plurality of cell assemblies are electrically connected, and when the plurality of cell assemblies are conveyed on the logistics line, the risk of tension on the interconnected conductive portions of the plurality of cell assemblies can be effectively reduced, thereby decreasing the risk of cracking in the conductive portions and improving the reliability of the plurality of cell assemblies. Moreover, during the electrical connection and housing insertion operations of the plurality of cell assemblies, corresponding operations are performed while the plurality of cell assemblies are maintained in the stacked state in the second direction, such that the relative postures of the plurality of cell assemblies before the plurality of cell assemblies are placed into the housing body are consistent with the relative postures of the plurality of cell assemblies after the plurality of cell assemblies are placed into the housing. Therefore, during the assembly process of the battery cell, the assembly device does not need to adjust the relative placement postures of the plurality of cell assemblies before and after insertion into the housing body, thereby simplifying the structure of the assembly device and simplifying the assembly procedure of the battery cell.

In some embodiments, the assembly device further includes: a gathering tool, configured to gather the conductive portions of the plurality of cell assemblies, such that parts of the conductive portions of the plurality of cell assemblies proximal to the active substance-coated portion converge to form a first gathering portion, and parts of the conductive portions of the plurality of cell assemblies distal to the active substance-coated portion converge to form a second gathering portion, where the first fixing tool is configured to pre-connect the second gathering portion.

In the above technical solution, the gathering tool is disposed to converge the conductive portions of the plurality of cell assemblies to form the first gathering portion and the second gathering portion, thereby enabling the shaping of the plurality of conductive portions. Subsequent operations on the first gathering portion and the second gathering portion enable corresponding operations on the plurality of conductive portions, which is beneficial to improving assembly efficiency. Meanwhile, the second gathering portion is pre-connected by the first fixing tool, such that the second gathering portion is formed as an integrated structure, thereby reducing interlayer gaps among the plurality of tabs in the second gathering portion. For example, the plurality of tabs are enabled to form a plate-like structure with certain rigidity, thereby enabling a direct or indirect electrical connection between the second gathering portion and the terminal post, and facilitating subsequent operations.

In some embodiments, the assembly device further includes: an auxiliary tool, adapted to be detachably connected to the second gathering portion, and configured to drive the second gathering portion to pass through a clearance hole formed in the support, such that at least a part of the second gathering portion extends to a side of the support distal to the active substance-coated portion.

In the above technical solution, the auxiliary tool is disposed to drive the second gathering portion to pass through the clearance hole formed in the support, thereby facilitating the assembly of the second gathering portion and the support and the assembly of the active substance-coated portion and the support. In addition, the auxiliary tooling is detachably connected to the second gathering portion, such that after completing a corresponding operation, the auxiliary tool can be separated from the second gathering portion without affecting subsequent operations.

In some embodiments, the assembly device further includes: a coating tool, configured to coat the active substance-coated portion with an insulating member; and a second fixing tool, configured to fixedly connect the insulating member to the support.

In the above technical solution, the coating tool is disposed to coat the active substance-coated portion with the insulating member, and the second fixing tool is disposed to fix the insulating member to the support, such that the coating reliability of the insulating member is improved, and the insulating property between the plurality of cell assemblies and the housing body is improved, thereby enhancing the reliability of the battery cell. In addition, the insulating member and the support can provide certain protection to the plurality of cell assemblies, reducing the risk of the cell assemblies being scratched by the housing body during housing insertion of the plurality of cell assemblies.

In some embodiments, the assembly device further includes: a third fixing tool, configured to fix a housing cover to an open end of the housing body and fixedly connect the conductive portions to the terminal post; and a fourth fixing tool, configured to assemble and fix the terminal post to the housing body.

In the above technical solution, the third tool is disposed to fix the housing cover to the housing body and seal the open end of the housing body, so as to seal the plurality of cell assemblies within an accommodating cavity defined by the housing body and the housing cover, thereby achieving reliable encapsulation of the plurality of cell assemblies. Furthermore, the third fixing tool can fixedly connect the conductive portions to the terminal post to achieve an electrical connection between the conductive portions and the terminal post, thereby enabling normal charging and discharging of the battery cell. The fourth fixing tool is disposed to fix the terminal post to the housing body, so as to achieve the assembly of the terminal post and the housing body.

In some embodiments, an accommodating groove is formed in the terminal post, an opening of the accommodating groove is formed on a surface of a side of the terminal post distal to the cell assemblies, and a through hole is formed on a wall of the accommodating groove adjacent to the cell assembly. The assembly device further includes: a fifth fixing tool, configured to fix a cover plate at the opening of the accommodating groove.

In the above technical solution, the fifth fixing tool is disposed to fix the cover plate at the opening of the accommodating groove, such that the cover plate is fixed to the terminal post, and the cover plate seals the opening of the accommodating groove, thereby preventing the leakage of the electrolyte in the housing body from the opening of the accommodating groove.

### BRIEF DESCRIPTION OF THE DRAWINGS

The above and/or additional aspects and advantages of the present application will become apparent and readily understood from the description of embodiments in conjunction with the drawings below, in which:
FIG. 1 is a cross-sectional view of a battery cell according to some embodiments of the present application;
FIG. 2 is a schematic flowchart of an assembly method according to some embodiments of the present application;
FIG. 3 is a schematic flowchart of an assembly method according to some embodiments of the present application;
FIG. 4 is a schematic flowchart of an assembly method according to some embodiments of the present application;
FIG. 5 is a schematic flowchart of an assembly method according to some embodiments of the present application;
FIG. 6 is a schematic flowchart of an assembly method according to some embodiments of the present application;
FIG. 7 is a schematic flowchart of an assembly method according to some embodiments of the present application;
FIG. 8 is a schematic flowchart of an assembly method according to some embodiments of the present application;
FIG. 9 is a schematic flowchart of an assembly method according to some embodiments of the present application;
FIG. 10 is a schematic flowchart of an assembly method according to some embodiments of the present application;
FIG. 11 is a schematic diagram of an assembly process of a battery cell according to some embodiments of the present application;
FIG. 12 is a schematic diagram of two different implementations of a plurality of cell assemblies according to some embodiments of the present application; and
FIG. 13 is a schematic diagram of an assembly device according to some embodiments of the present application.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those of ordinary skills in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application or the above drawings are used to distinguish different objects and are not intended to describe a specific order or priority.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that various directions in the embodiments of the present application shown in the drawings are only exemplary and should not impose any limitation on the present application.

The term "plurality of" used in the present application refers to more than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, etc. This is not limited in the embodiments of the present application. The battery cell may be cylindrical, flat, rectangular parallelepiped-shaped, or in other shapes, which is also not limited in the embodiments of the present application. According to the packaging method, battery cells are typically divided into three types: cylindrical battery cells, square battery cells, and pouch battery cells, which are also not limited in the embodiments of the present application.

Illustratively, a battery cell may typically include a housing, a cell assembly, and an electrolyte. The housing is configured to accommodate the cell assembly and the electrolyte, and at least one positive electrode terminal post and at least one negative electrode terminal post are provided on the housing. There is one or more cell assemblies in the battery cell, and each of the cell assemblies is formed by stacking or winding a positive electrode plate, a negative electrode plate, and a separator.

The positive electrode plate may typically include a positive electrode current collector and a positive electrode active substance layer. The positive electrode current collector is directly or indirectly coated with the positive electrode active substance layer, the positive electrode current collector not coated with the positive electrode active substance layer protrudes from the positive electrode current collector coated with the positive electrode active substance layer, the positive electrode current collector not coated with the positive electrode active substance layer serves as a positive electrode tab, and a plurality of positive electrode tabs are stacked together and electrically connected to the positive electrode terminal post. Illustratively, the plurality of positive electrode tabs stacked together may be directly welded to the positive electrode terminal post to form an electrical connection. Alternatively, the cell assembly may further include a positive electrode adapting piece, the plurality of positive electrode tabs stacked together are welded to one end of the positive electrode adapting piece, and the other end of the positive electrode adapting piece is welded to the positive electrode terminal post to form an electrical connection between the positive electrode tabs and the positive electrode terminal post.

The negative electrode plate may typically include a negative electrode current collector and a negative electrode active substance layer. The negative electrode current collector is directly or indirectly coated with the negative electrode active substance layer, the negative electrode current collector not coated with the negative electrode active substance layer protrudes from the negative electrode current collector coated with the negative electrode active substance layer, the negative electrode current collector not coated with the negative electrode active substance layer serves as a negative electrode tab, and a plurality of negative electrode tabs are stacked together and electrically connected to the negative electrode terminal post. Illustratively, the plurality of negative electrode tabs stacked together may be directly welded to the negative electrode terminal post to form an electrical connection. Alternatively, the cell assembly may further include a negative electrode adapting piece, the plurality of negative electrode tabs stacked together are welded to one end of the negative electrode adapting piece, and the other end of the negative electrode adapting piece is welded to the negative electrode terminal post to form an electrical connection between the negative electrode tabs and the negative electrode terminal post. The material of the separator is not limited, and may be, for example, polypropylene or polyethylene.

In recent years, new energy vehicles have developed by leaps and bounds. In the field of electric vehicles, batteries, as the power source of electric vehicles, play an irreplaceable and important role. Typically, a battery includes a plurality of battery cells. Currently, the assembly process of the battery cells is cumbersome, resulting in low assembly efficiency.

In the related art, a battery cell includes a plurality of cell assemblies. In the assembly process of the battery cell, the plurality of cell assemblies are transported in a laid-flat manner (for example, two large surfaces of each of the cell assemblies are arranged opposite to each other in an up-down direction, and the plurality of cell assemblies are dispersedly placed on a logistics line), and the conductive portions of the plurality of cell assemblies are electrically connected. As a result, the plurality of cell assemblies occupy a relatively large area during the assembly procedure. Moreover, during transportation on the logistics line, since relative movement among the plurality of cell assemblies may occur, the interconnected conductive portions of the plurality of cell assemblies are easily subjected to tension, resulting in cracking of the conductive portions, particularly causing tension-induced cracking of the tabs of the plurality of cell assemblies. Meanwhile, when the plurality of cell assemblies are subsequently placed into the housing of the battery cell, the relative placement states of the plurality of cell assemblies are required to be altered to transition each of the plurality of cell assemblies from the laid-flat state to a sequentially stacked state of the plurality of cell assemblies, thereby making the assembly procedure cumbersome.

Based on the above considerations, to simplify the assembly process of battery cells and improve assembly efficiency, the embodiments of the present application provide an assembly method. The assembly method is used for assembling a battery. The battery cell includes a housing body and a plurality of cell assemblies accommodated in the housing body and connected in series and/or in parallel. Each of the cell assemblies includes an active substance-coated portion and a conductive portion. The conductive portion is located at one end of the cell assembly in a first direction and is configured to electrically connect the active substance-coated portion to a terminal post of the battery cell. The assembly method includes: stacking the plurality of cell assemblies in a second direction, the second direction being perpendicular to the first direction; electrically connecting the conductive portions of the plurality of cell assemblies; and placing the plurality of cell assemblies into the housing body.

In the above technical solution, the electrical connection operation of the plurality of cell assemblies is performed when the plurality of cell assemblies remain stacked in the second direction, such that the plurality of cell assemblies occupy a small area during the above operation, which facilitates the conveyance of the plurality of cell assemblies in a stacked state on a logistics line. When the second direction is an up-down direction, the lowermost cell assembly of the plurality of cell assemblies is in contact with the logistics line, so as to reduce the risk of relative movement among the plurality of cell assemblies. Therefore, after the conductive portions of the plurality of cell assemblies are electrically connected, and when the plurality of cell assemblies are conveyed on the logistics line, the risk of tension on the interconnected conductive portions of the plurality of cell assemblies can be effectively reduced, thereby decreasing the risk of cracking in the conductive portions and improving the reliability of the plurality of cell assemblies. Moreover, during the electrical connection and housing insertion operations of the plurality of cell assemblies, corresponding operations are performed while the plurality of cell assemblies are maintained in the stacked state in the second direction, such that the relative postures of the plurality of cell assemblies before the plurality of cell assemblies are placed into the housing body are consistent with the relative postures of the plurality of cell assemblies after the plurality of cell assemblies are placed into the housing body. Therefore, during the assembly process of the battery cell, the need for adjusting the relative placement postures of the plurality of cell assemblies before and after insertion into the housing body may be avoided, thereby simplifying the assembly procedure of the battery cell.

Certainly, the second direction is not limited to an up-down direction, and, for example, the second direction may also be a left-right direction, a front-back direction, or the like.

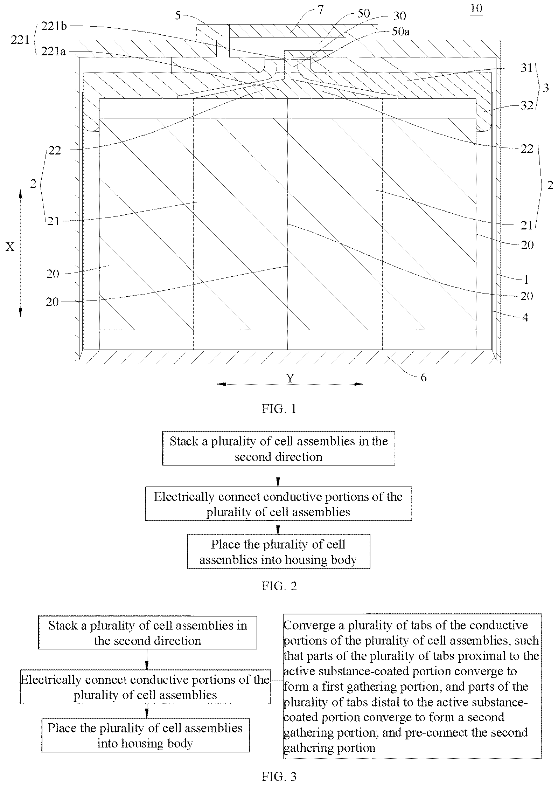

Referring to FIG. 1, FIG. 1 is a cross-sectional view of a battery cell 10 according to some embodiments of the present application. The battery cell 10 is in the shape of a rectangular parallelepiped, and the height direction of the battery cell 10 is defined as the first direction X, the length direction of the battery cell 10 is defined as the third direction Z (i.e., a direction perpendicular to the plane of FIG. 1), and the thickness direction of the battery cell 10 is defined as the second direction Y. The first direction X, the second direction Y, and the third direction Z are perpendicular to each other, which is, however, not limiting. In other embodiments of the present application, the battery cell 10 may also be multi-prismatic, flat, or in other shapes.

The battery cell 10 may include two cell assemblies 2, the two cell assemblies 2 may be sequentially disposed in the first direction, the conductive portion 22 of each of the cell assemblies 2 is located at one end of the cell assembly 2 in the first direction, and the conductive portions 22 of the plurality of cell assemblies 2 may be located on the same side of the plurality of cell assemblies 2 in the first direction. Certainly, the battery cell 10 may also include three or more cell assemblies 2.

Referring to FIGS. 1 and 2, FIG. 2 is a schematic flowchart of an assembly method according to some embodiments of the present application. In the embodiments of the present application, the assembly method is used for assembling a battery cell 10. The battery cell 10 includes a housing body 1 and a plurality of cell assemblies 2 accommodated in the housing body 1, the plurality of cell assemblies 2 are connected in series and/or in parallel, and then the plurality of cell assemblies 2 of the battery cell 10 may be connected in series, in parallel, or in series-parallel. The series-parallel connection means that both series connection and parallel connection are present for the connection among the plurality of cell assemblies 2. Each of the cell assemblies 2 includes an active substance-coated portion 21 and a conductive portion 22. The active substance-coated portion 21 is a portion of the cell assembly 2 that is coated with an active substance, and can assist in the deintercalation of metal ions during the charging and discharging processes of the battery cell 10. The conductive portion 22 is located at one end of the cell assembly 2 in the first direction, and the conductive portion 22 is configured to electrically connect the active substance-coated portion 21 to the terminal post 5 of the battery cell 10, such that the conductive portion 22 may be a structure that electrically connects the active substance-coated portion 21 to the terminal post 5 and is not coated with an active substance.

It should be noted that, in the embodiments of the present application, the active substance-coated portion 21 is divided into a positive electrode active substance-coated portion and a negative electrode active substance-coated portion. The positive electrode active substance-coated portion includes a portion in which the positive electrode current collector is coated with a positive electrode active substance layer, and the negative electrode active substance-coated portion includes a portion in which the negative electrode current collector is coated with a negative electrode active substance layer. The conductive portion 22 is divided into a positive electrode conductive portion and a negative electrode conductive portion. The positive electrode conductive portion electrically connects the positive electrode active substance-coated portion and the positive electrode terminal post, and the negative electrode conductive part electrically connects the negative electrode active substance-coated portion and the negative electrode terminal post.

In the embodiments of the present application, the assembly method includes: stacking the plurality of cell assemblies 2 in the second direction, the second direction being perpendicular to the first direction; electrically connecting the conductive portions 22 of the plurality of cell assemblies 2 to achieve a paired connection of the plurality of cell assemblies 2; and placing the plurality of cell assemblies 2 into the housing body 1, such that the plurality of cell assemblies 2 can be placed into the housing body 1 in a posture of being stacked in the second direction.

It can be seen that in the above technical solution, the electrical connection operation of the plurality of cell assemblies 2 is performed when the plurality of cell assemblies 2 remain stacked in the second direction, such that the plurality of cell assemblies 2 occupy a small area during the above operation, which facilitates the conveyance of the plurality of cell assemblies 2 in a stacked state on a logistics line. When the second direction is an up-down direction, the lowermost cell assembly of the plurality of cell assemblies 2 is in contact with the logistics line, so as to reduce the risk of relative movement among the plurality of cell assemblies 2. Therefore, after the conductive portions 22 of the plurality of cell assemblies 2 are electrically connected, and when the plurality of cell assemblies 2 are conveyed on the logistics line, the risk of tension on the interconnected conductive portions 22 of the plurality of cell assemblies 2 can be effectively reduced, thereby decreasing the risk of cracking in the conductive portions 22 and improving the reliability of the plurality of cell assemblies 2. Moreover, during the electrical connection and housing insertion operations of the plurality of cell assemblies 2, corresponding operations are performed while the plurality of cell assemblies 2 are maintained in the stacked state in the second direction, such that the relative postures of the plurality of cell assemblies 2 before the plurality of cell assemblies 2 are placed into the housing body 1 are consistent with the relative postures of the plurality of cell assemblies 2 after the plurality of cell assemblies 2 are placed into the housing body 1. Therefore, during the assembly process of the battery cell 10, the need for adjusting the relative placement postures of the plurality of cell assemblies 2 before and after insertion into the housing body may be avoided, thereby simplifying the assembly procedure of the battery cell 10.

In addition, since in the embodiments of the present application, the plurality of cell assemblies 2 are stacked in the second direction, the conductive portions 22 of the plurality of cell assemblies 2 may be located on the same side of the plurality of cell assemblies 2 in the first direction, thereby enabling corresponding and electrical connection of the conductive portions 22 of different cell assemblies 2.

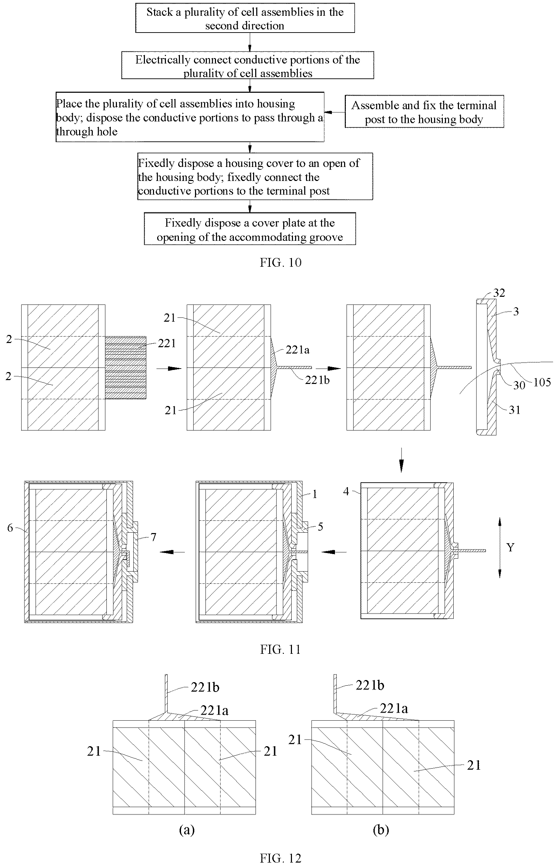

Referring to FIG. 1 and FIG. 11, in some embodiments of the present application, the cell assembly 2 has a plurality of side walls, the side wall with the largest area in the plurality of side walls is a first side wall 20, and the first side wall 20 may be a "large surface" of the cell assembly 2.

Stacking the plurality of cell assemblies 2 in the second direction includes: disposing the first side walls 20 of two adjacent cell assemblies 2 back-to-back and/or face-to-face in the second direction.

In the above technical solution, the first side walls 20 of the two cell assemblies 2 are disposed back-to-back and/or face-to-face in the second direction, which enhances the stacking stability of the plurality of cell assemblies 2 in the second direction, and facilitates the conveyance of the plurality of cell assemblies 2 on the logistics line while maintaining the above stacked posture, thereby improving production efficiency.

For example, the cell assembly 2 includes one first side wall 20, then the first side walls 20 of two adjacent cell assemblies 2 may be disposed face-to-face or back-to-back in the second direction to achieve stacking of two adjacent cell assemblies 2 in the second direction. The cell assembly 2 includes two first side walls 20 disposed face-to-face in the first direction, then one first side wall 20 of one cell assembly 2 of the two adjacent cell assemblies 2 and one first side wall 20 of the other cell assembly 2 may be disposed face-to-face, and the other first side wall 20 of the one cell assembly 2 and the other first side wall 20 of the other cell assembly 2 are disposed back-to-back.

Referring to FIG. 3 and FIG. 11, in some embodiments of the present application, the above electrically connecting the conductive portions 22 of the plurality of cell assemblies 2 includes: converging a plurality of tabs 221 of the conductive portions 22 of the plurality of cell assemblies 2, such that parts of the plurality of tabs 221 proximal to the active substance-coated portion 21 converge (i.e., converge in a direction proximal to each other) to form a first gathering portion 221a, and parts of the plurality of tabs 221 distal to the active substance-coated portion 21 converge to form a second gathering portion 221b; and pre-connecting the second gathering portion 221b, such that the tabs 221 form an electrical connection path.

Illustratively, the active substance-coated portion 21 may include a current collector and an active substance layer disposed on the current collector. The conductive portion 22 includes a tab portion electrically connected to the current collector, the tab portion includes a plurality of tabs 221, and the tabs 221 are structures electrically connected to the current collector but not coated with the active substance. For example, the tabs 221 may be formed by directly die-cutting the current collector.

In the above technical solution, the tabs 221 of the plurality of cell assemblies 2 are first converged to form a first gathering portion 221a and a second gathering portion 221b, thereby enabling the shaping of the plurality of tabs 221. Subsequent operations on the first gathering portion 221a and the second gathering portion 221b enable corresponding operations on the plurality of tabs 221, which is beneficial to improving assembly efficiency. Meanwhile, by pre-connecting the second gathering portion 221b, the second gathering portion 221b is formed as an integrated structure, thereby reducing interlayer gaps among the plurality of tabs 221 in the second gathering portion 221b. For example, the plurality of tabs 221 are enabled to form a plate-like structure with certain rigidity, thereby enabling a direct or indirect electrical connection between the second gathering portion 221b and the terminal post 5, and facilitating subsequent operations.

Apparently, in the above technical solution, the plurality of tabs 221 only converge and gather but are not connected when forming the first gathering portion 221a and the second gathering portion 221b, and then the second gathering portion 221b is pre-connected, such that the plurality of tabs 221 can be connected at the second gathering portion 221b to form an integrated structure. For example, the second gathering portion 221b may be pre-connected by welding (for example, ultrasonic welding), such that the second gathering portion 221b is formed as an integrated plate-like structure. Alternatively, the second gathering portion 221b may be pre-connected by bonding with a conductive adhesive.

It should be noted that in the above technical solution, along the extension direction of the tab 221, the first gathering portion 221a and the second gathering portion 221b are sequentially disposed along a direction away from the active substance-coated portion 21. However, the specific positions of the first gathering portion 221a and the second gathering portion 221b are not limited, that is, no requirements are imposed on the proximity the first gathering portion 221a to the active substance-coated portion 21 or on the distance of the second gathering portion 221b to the active substance-coated portion 21.

In the embodiments of the present application, the tabs 221 may be divided into positive electrode tabs 221 and negative electrode tabs 221. The positive electrode tabs 221 of the plurality of cell assemblies 2 are gathered and stacked together, and the second gathering portion 221b formed by the plurality of positive tabs 221 is pre-connected. Similarly, the negative electrode tabs 221 of the plurality of cell assemblies 2 are gathered and stacked together, and the second gathering portion 221b formed by the plurality of negative tabs 221 is pre-connected.

It can be understood that in the embodiments of the present application, the plurality of tabs 221 of the conductive portions 22 of the plurality of cell assemblies 2 are converged, and the above operation is performed while the plurality of cell assemblies 2 are in a stacked state in the second direction, such that in the above assembly process of the battery cell 10, the placement postures of the plurality of cell assemblies 2 are not required to be adjusted, thereby simplifying the assembly procedure.

In some embodiments of the present application, when two cell assemblies 2 are provided, the tabs 221 of the two cell assemblies 2 may be gathered together, and the gathering position is located at the center position between the two cell assemblies 2 to form a symmetrical gathering form (for example, as shown in FIG. 1 and FIG. 11). Alternatively, in some other embodiments, when the tabs 221 of the two cell assemblies 2 are gathered together, the gathering position may further be proximal to one of the cell assemblies 2, to form an asymmetric gathering form (for example, as shown in FIG. 12(a) and FIG. 12(b)). In this case, in the first direction, the projection of the gathering position may be located within the range of projected outer contours of the tabs 221 of the two cell assemblies 2 (as shown in FIG. 12(a)), or in the first direction, the projection of the gathering position may be located beyond the range of projected outer contours of the tabs 221 of the two cell assemblies 2 (as shown in FIG. 12(b)).

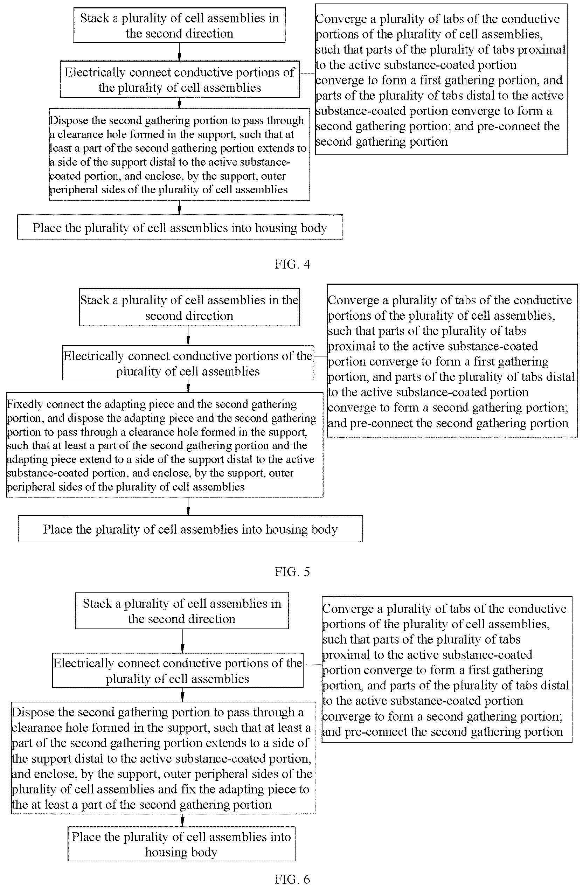

Referring to FIG. 4 and FIG. 11, in the first implementation, after pre-connecting the second gathering portion 221b and before placing the plurality of cell assemblies 2 into the housing body 1, the assembly method further includes: disposing the second gathering portion 221b to pass through a clearance hole 30 formed in the support 3, such that at least a part of the second gathering portion 221b extends to a side of the support 3 distal to the active substance-coated portion 21, and enclosing, by the support 3, outer peripheral sides of the plurality of cell assemblies 2, thereby wrapping the plurality of cell assemblies 2 into an integrated structure by using the support 3.

In the above technical solution, by arranging a support 3, the second gathering portion 221b extends, through the clearance hole 30, to a side of the support 3 distal to the active substance-coated portion 21, such that the arrangement of the support 3 does not affect the electrical connection between the second gathering portion 221b and the corresponding terminal post 5. Meanwhile, the support 3 may enclose the outer peripheral walls of the plurality of active substance-coated portions 21 to provide a certain limiting effect on the plurality of active substance-coated portions 21. For example, the support 3 can limit the relative movement of the plurality of cell assemblies 2 in the second direction and the third direction to a certain extent, such that the plurality of cell assemblies 2 are constrained as an integrated structure by the support 3, thereby facilitating subsequent housing insertion operations. Additionally, the clearance hole 30 formed in the support 3 can impose a certain degree of constraint on the second gathering portion 221b, thereby enhancing the stability of the second gathering portion 221b and the first gathering portion 221a in maintaining their gathered state, providing certain support and shaping effects on the conductive portions 22, and reducing the risk of cracking in the first gathering portion 221a and the second gathering portion 221b. Furthermore, the active substance-coated portion 21 can be isolated from the housing body 1, so as to reduce the risk of short-circuit connection between the conductive portions 22 and the active substance-coated portions 21, and enhance the reliability of the battery cell 10.

It can be seen that after the plurality of cell assemblies 2 are assembled with the support 3, the assembled plurality of cell assemblies 2 and the support 3 are placed into the housing body 1 together, such that the support 3 is accommodated in the housing body 1. In this case, the support 3 may be located on a side of the active substance-coated portion 21 proximal to the corresponding terminal post 5, and the part of the second gathering portion 221b extending to one side of the support 3 distal to the active substance-coated portion 21 is convenient for subsequent electrical connection to the corresponding terminal post 5, thereby enabling normal charging and discharging of the battery cell 10. Therefore, during the subsequent housing insertion operations, the support 3 may enter the housing body 1 prior to the active substance-coated portion 21, such that the support 3 can provide a certain protective effect on the active substance-coated portion 21, thereby reducing the risk of the housing body 1 scratching the active substance-coated portion 21. The part of the second gathering portion 221b extending to the side of the support 3 distal to the active substance-coated portion 21 may be directly electrically connected to the corresponding terminal post 5. Alternatively, the part of the second gathering portion 221b extending to the side of the support 3 distal to the active substance-coated portion 21 may be fixed to the adapting piece first, and then the adapting piece is electrically connected to the corresponding terminal post 5, such that the second gathering portion 221b is indirectly electrically connected to the corresponding terminal post 5.

Illustratively, the support 3 may include a body portion 31 and a position-limiting portion 32. The position-limiting portion 32 is disposed at an edge of the body portion 31, and extends from the body portion 31 in the first direction, such that a fitting groove is formed on one side of the support 3 in the first direction, and the clearance hole 30 is formed in the body portion 31. When the plurality of cell assemblies 2 are assembled with the support 3, the side of the support 3 where the fitting groove is formed is disposed to face the plurality of cell assemblies 2, and the second gathering portion 221b is disposed to pass through the clearance hole 30. The support 3 and the plurality of cell assemblies 2 are brought close to each other in the first direction until the plurality of cell assemblies 2 are fitted into the fitting groove and the position-limiting portion 32 is located on the outer peripheral side of the active substance-coated portion 21, such that the position-limiting portion 32 functions to limit the position of the plurality of active substance-coated portions 21 in the second direction and the third direction, thereby ameliorating the issue of corrosion due to overlapping of carbon powder detaching from the edge of the active substance-coated portion 21 with the housing body 1. In addition, the arrangement of the position-limiting portion 32 can further facilitate the connection of the support 3 to the insulating member 4 described below, such that the plurality of cell assemblies 2 are wrapped by the support 3 and the insulating member 4 to improve the insulation effect. Compared to the prior art in which at least eight insulating adhesives are attached to the front and back sides of the tab, in the embodiments of the present application, the insulating requirements of the battery cell 10 can be satisfied without attaching the tab adhesives, and meanwhile, in the subsequent housing insertion operations, the risk of the cell assembly 2 being scratched by the housing body 1 is further reduced, and the reliability of the battery cell 10 is enhanced.

The position-limiting portion 32 is connected to the body portion 31, and the position-limiting portion 32 may extend from the entire circumferential edge of the body portion 31 to form an annular extending structure, or may extend from a part of the circumferential edge of the body portion 31 to form a block structure protruding relative to the body portion 31. For example, the position-limiting portion 32 is formed as an annular structure. The position-limiting portion 32 may include two first position-limiting sub-portions disposed opposite to each other in the second direction and two second position-limiting sub-portions disposed opposite to each other in the third direction. The two first position-limiting sub-portions respectively cooperate with two sides of the plurality of active substance-coated portions 21 in the second direction, to limit the relative movement of the plurality of active substance-coated portions 21 in the second direction. The two second position-limiting sub-portions respectively cooperate with two sides of the plurality of active substance-coated portions 21 in the third direction, to limit the relative movement of the plurality of active substance-coated portions 21 in the third direction. The first direction, the second direction, and the third direction are perpendicular to each other.

In other embodiments of the present application, the battery cell 10 may not include the support 3. In this case, when the plurality of cell assemblies 2 are inserted into the housing, the support 3 is not placed into the housing body 1.

Referring to FIG. 5, in the second implementation, the conductive portion 22 further includes an adapting piece. After the second gathering portion 221b is pre-connected and before the plurality of cell assemblies 2 are placed into the housing body 1, the assembly method further includes: fixedly connecting the adapting piece to the second gathering portion 221b, and disposing the adapting piece and the second gathering portion 221b to pass through the clearance hole 30 formed in the support 3, such that at least a part of the second gathering portion 221b and the adapting piece extend to a side of the support 3 distal to the active substance-coated portion 21, and enclosing, by the support 3, outer peripheral sides of the plurality of cell assemblies 2, thereby wrapping the plurality of cell assemblies 2 into an integrated structure by using the support 3.

In the above technical solution, by arranging a support 3, the adapting piece and the second gathering portion 221b extend, through the clearance hole 30, to a side of the support 3 distal to the active substance-coated portion 21, such that the arrangement of the support 3 does not affect the electrical connection between the adapting piece and the corresponding terminal post 5. Meanwhile, the support 3 may enclose the outer peripheral walls of the plurality of active substance-coated portions 21 to provide a certain limiting effect on the plurality of active substance-coated portions 21. For example, the support 3 can limit the relative movement of the plurality of cell assemblies 2 in the second direction and the third direction to a certain extent, such that the plurality of cell assemblies 2 are constrained as an integrated structure by the support 3, thereby facilitating subsequent housing insertion operations. Additionally, the clearance hole 30 formed in the support 3 can impose a certain degree of constraint on the second gathering portion 221b, thereby enhancing the stability of the second gathering portion 221b and the first gathering portion 221a in maintaining their gathered state, providing certain support and shaping effects on the conductive portions 22, and reducing the risk of cracking in the first gathering portion 221a and the second gathering portion 221b. Furthermore, the active substance-coated portion 21 can be isolated from the housing body 1, so as to reduce the risk of short-circuit connection between the conductive portions 22 and the active substance-coated portions 21, and enhance the reliability of the battery cell 10.

It can be seen that the adapting piece is fixedly connected to the second gathering portion 221b, and after the plurality of cell assemblies 2 are assembled with the support 3, is placed into the housing body 1 together, such that the support 3 is accommodated in the housing body 1. The adapting piece may be accommodated in the housing body 1, or the adapting piece may be exposed through a hole in the housing body 1. In this case, the support 3 may be located on a side of the active substance-coated portion 21 proximal to the corresponding terminal post 5, and the adapting piece may be subsequently electrically connected to the corresponding terminal post 5, thereby enabling the normal charging and discharging of the battery cell 10.

In some examples, the structure of the support 3 in the second implementation of the present application may be the same as the structure of the support 3 in the first implementation, and the details are not described herein again.

Referring to FIG. 6, in the third implementation, the conductive portion 22 further includes an adapting piece. After the second gathering portion 221b is pre-connected and before the plurality of cell assemblies 2 are placed into the housing body 1, the assembly method further includes: disposing the second gathering portion 221b to pass through the clearance hole 30 formed in the support 3, such that at least a part of the second gathering portion 221b extends to a side of the support 3 distal to the active substance-coated portion 21, and enclosing, by the support 3, outer peripheral sides of the plurality of cell assemblies 2, thereby wrapping the plurality of cell assemblies 2 into an integrated structure by using the support 3 and fixing the adapting piece to the above at least a part of the second gathering portion 221b. In this case, the adapting piece is located on the side of the support 3 distal to the active substance-coated portion 21.

In the above technical solution, by arranging a support 3, the second gathering portion 221b extends, through the clearance hole 30, to a side of the support 3 distal to the active substance-coated portion 21, such that the arrangement of the support 3 does not affect the subsequent electrical connection between the second gathering portion 221b and the adapting piece. Meanwhile, the support 3 may enclose the outer peripheral walls of the plurality of active substance-coated portions 21 to provide a certain limiting effect on the plurality of active substance-coated portions 21. For example, the support 3 can limit the relative movement of the plurality of cell assemblies 2 in the second direction and the third direction to a certain extent, such that the plurality of cell assemblies 2 are constrained as an integrated structure by the support 3, thereby facilitating subsequent housing insertion operations. Additionally, the clearance hole 30 formed in the support 3 can impose a certain degree of constraint on the second gathering portion 221b, thereby enhancing the stability of the second gathering portion 221b and the first gathering portion 221a in maintaining their gathered state, providing certain support and shaping effects on the conductive portions 22, and reducing the risk of cracking in the first gathering portion 221a and the second gathering portion 221b. Furthermore, the active substance-coated portion 21 can be isolated from the housing body 1, so as to reduce the risk of short-circuit connection between the conductive portions 22 and the active substance-coated portions 21, and enhance the reliability of the battery cell 10.

It can be seen that after the plurality of cell assemblies 2 are assembled with the support 3, the part of the second gathering portion 221b extending to the side of the support 3 distal to the active substance-coated portion 21 is fixed to the adapting piece and placed into the housing body 1 together, such that the support 3 is accommodated in the housing body 1, and the adapting piece may be accommodated in the housing body 1, or the adapting piece may be exposed through a hole in the housing body 1. In this case, the support 3 may be located on a side of the active substance-coated portion 21 proximal to the corresponding terminal post 5, and the adapting piece may be subsequently electrically connected to the corresponding terminal post 5, thereby enabling the normal charging and discharging of the battery cell 10.

In some examples, the structure of the support 3 in the third implementation of the present application may be the same as the structure of the support 3 in the first implementation, and the details are not described herein again.

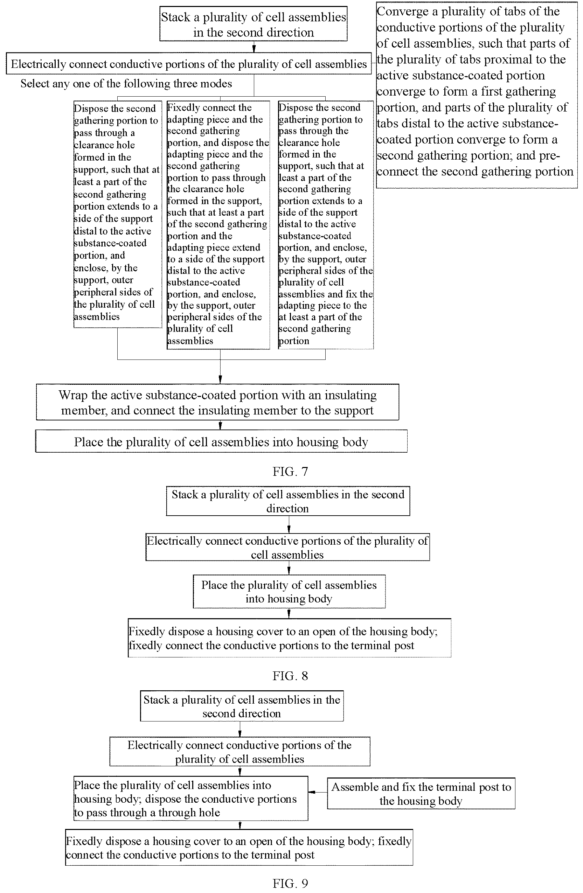

Referring to FIG. 7 and FIG. 11, in some embodiments of the present application, before the plurality of cell assemblies 2 are placed into the housing body 1, the assembly method further includes: wrapping the active substance-coated portion 21 with an insulating member 4, and connecting the insulating member 4 to the support 3.

In the above technical solution, in one aspect, by wrapping the active substance-coated portion 21 with the insulating member 4, the insulation reliability between the active substance-coated portion 21 and the housing body 1 can be improved, the corrosion of the housing body 1 caused by the contact between the active substance-coated portion 21 and the housing body 1 can be reduced or prevented, and the leakage of the electrolyte caused by the corrosion of the housing body 1 can be reduced, thereby improving the reliability of the battery cell 10. In another aspect, connecting the insulating member 4 to the support 3 can reduce the difficulty of fixing the insulating member 4 and improve the reliability of the insulating member 4 wrapped outside the active substance-coated portion 21. In still another aspect, the insulating member 4 and the support 3 can substantially enclose the plurality of cell assemblies 2, such that the risk of the cell assemblies 2 being scratched by the housing body 1 can be further reduced during subsequent housing insertion operations, thereby enhancing the reliability of the battery cell 10.

It can be seen that the support 3 and the insulating member 4 may together include the outer surface of the cell assembly 2 to reduce the risk of scratching the cell assembly 2.

It can be understood that the operations of wrapping with the insulating member 4 and connecting the insulating member 4 to the support 3 in the above technical solution are respectively applicable to the first implementation, the second implementation, and the third implementation described above in the present application.

Illustratively, the insulating member 4 is an insulating film such as a mylar film, and the insulating member 4 is fixed to the support 3 by welding. The support 3 may include a body portion 31 and a position-limiting portion 32. The position-limiting portion 32 is fitted on outer peripheral walls of the plurality of active substance-coated portions 21, and the insulating member 4 may be fixed to the position-limiting portion 32 by welding.

Referring to FIG. 8, in some embodiments of the present application, after the plurality of cell assemblies 2 are placed into the housing body 1, the assembly method further includes: fixing a housing cover 6 at the open end of the housing body 1, such that the housing cover 6 seals the open end of the housing body 1; and fixedly connecting the conductive portions 22 to the terminal post 5.

In the above technical solution, the housing cover 6 is fixedly disposed at the open end of the housing body 1 to seal the plurality of cell assemblies 2 within an accommodating cavity defined by the housing body 1 and the housing cover 6, thereby achieving reliable encapsulation of the plurality of cell assemblies 2. The conductive portions 22 are fixedly connected to the terminal post 5 to achieve an electrical connection between the conductive portions 22 and the terminal post 5, thereby enabling normal charging and discharging of the battery cell 10.

It can be understood that for the above first implementation, when the conductive portions 22 are fixedly connected to the terminal post 5, the part of the second gathering portion 221b extending to the side of the support 3 distal to the active substance-coated portion 21 is fixedly connected to the terminal post 5. For the above second implementation and the third implementation, the adapting piece is fixedly connected to the terminal post 5.

It should be noted that the sequence of "fixing the housing cover 6 at the open end of the housing body 1, such that the housing cover 6 seals the open end of the housing body 1" and "fixedly connecting the conductive portions 22 to the terminal post 5 to achieve an electrical connection between the conductive portions 22 and the terminal post 5" is not specifically limited. For example, after the plurality of cell assemblies 2 are placed into the housing body 1, the housing cover 6 may be first fixed at the open end of the housing body 1, and then the conductive portions 22 are fixedly connected to the terminal post 5; or the conductive portions 22 may be first fixed and connected to the terminal post 5, and then the housing cover 6 is fixed at the open end of the housing body 1.

In addition, in the embodiments of the present application, the connecting mode between the housing cover 6 and the housing body 1 and the connecting mode between the conductive portions 22 and the terminal post 5 are not specifically limited. For example, the housing cover 6 and the housing body 1 are fixed by welding, and the conductive portions 22 and the terminal post 5 are fixed by welding.

Referring to FIG. 9, in some embodiments of the present application, an accommodating groove 50 is formed on the terminal post 5, and an opening of the accommodating groove 50 is formed on a surface of the terminal post 5 distal to the cell assembly 2, such that the accommodating groove 50 can be opened toward a direction away from the active substance-coated portion 21. A through hole 50a is formed on a wall of the accommodating groove 50 adjacent to the cell assembly 2, that is, the through hole 50a is formed on a wall of the accommodating groove 50 distal to the opening. The assembly method further includes: assembling and fixing the terminal post 5 to the housing body 1; and disposing the conductive portions 22 to pass through the through hole 50a.

In the above technical solution, the terminal post 5 may be first assembled and fixed to the housing body 1, and then the conductive portions 22 may be disposed to pass through the through hole 50a, so as to facilitate the assembly of the housing body 1, the terminal post 5, and the cell assemblies 2, thereby improving assembly efficiency. Moreover, after disposing the conductive portions 22 to pass through the through hole 50a, the conductive portions 22 are then fixed to the terminal post 5, such that a part of the conductive portions 22 can be accommodated in the accommodating groove 50. The arrangement of the accommodating groove 50, in one aspect, can reduce the weight of the terminal post 5, which is beneficial to increasing the gravimetric energy density of the battery cell 10, and in another aspect, can accommodate a part of the conductive portions 22, such that the accommodation and arrangement of the conductive portions 22 can be facilitated through the opening of the accommodating groove 50, and the operation of fixedly connecting the conductive portions 22 to the terminal post 5 can be facilitated through the opening of the accommodating groove 50, thereby reducing assembly difficulty.

Illustratively, the terminal post 5 may include an end wall and a side wall. The end wall is located on a side of the side wall proximal to the active substance-coated portion 21, and the end wall and the side wall define, in an enclosing manner, the accommodating groove 50. The through hole 50a is formed on the end wall. In this case, the part of the conductive portions 22 accommodated in the accommodating groove 50 may be fixedly connected to the terminal post 5. In this case, the above part of the conductive portions 22 may be fixed to the end wall and/or the side wall. Alternatively, the part of the conductive portions 22 accommodated in the through hole 50a may be fixedly connected to the terminal post 5.

It should be noted that the sequence of "fixing the terminal post 5 to the housing body 1" and "placing the plurality of cell assemblies 2 into the housing body 1" is not specifically limited. For example, after the plurality of cell assemblies 2 are placed into the housing body 1, the terminal post 5 is fixed to the housing body 1. In this case, the sequence of "assembling and fixing the terminal post 5 to the housing body 1" and "fixing the housing cover 6 at the open end of the housing body 1" is not specifically limited, and "assembling and fixing the terminal post 5 to the housing body 1" may be prior to "fixedly connecting the conductive portions 22 to the terminal post 5". Alternatively, the terminal post 5 is first fixed to the housing body 1, and then the plurality of cell assemblies 2 are placed into the housing body 1.

In the embodiments of the present application, the fixing mode between the terminal post 5 and the housing body 1 is not specifically limited. For example, the terminal post 5 is riveted to the housing body 1. In this case, the terminal post 5 has a first flange portion and a second flange portion. The first flange portion is in a limiting fit with the outer side of the housing body 1, and the second flange portion is in a limiting fit with the inner side of the housing body 1. In this case, the terminal post 5 is first fixed to the housing body 1, and then the plurality of cell assemblies 2 are placed into the housing body 1. Certainly, the terminal post 5 and the housing body 1 may also be fixed by welding.

Similarly, the step of "disposing the conductive portions 22 to pass through the through hole 50a" may be prior to the step of "fixedly connecting the conductive portions 22 to the terminal post 5". The sequence of "disposing the conductive portions 22 to pass through the through hole 50a" and "placing the plurality of cell assemblies 2 into the housing body 1" is not specifically limited. The sequence of "disposing the conductive portions 22 to pass through the through hole 50a" and "fixing the housing cover 6 at the open end of the housing body 1" is not specifically limited. For example, after the plurality of cell assemblies 2 are placed into the housing body 1, the conductive portions 22 are disposed to pass through the through hole 50a. In this case, the assembly method may include first placing the plurality of cell assemblies 2 into the housing body 1, then assembling and fixing the terminal post 5 to the housing body 1, and then disposing the conductive portions 22 to pass through the through hole 50a. Alternatively, the assembly method may include first assembling and fixing the terminal post 5 to the housing body 1, then placing the plurality of cell assemblies 2 into the housing body 1, and then disposing the conductive portions 22 to pass through the through hole 50a; alternatively, the conductive portions 22 are first disposed to pass through the through hole 50a, and then the plurality of cell assemblies 2 are placed into the housing body 1, and in this case, the assembly method may include first assembling and fixing the terminal post 5 to the housing body 1, then disposing the conductive portions 22 to pass through the through hole 50a, and then placing the plurality of cell assemblies 2 into the housing body 1; alternatively, during the process of placing the plurality of cell assemblies 2 into the housing body 1, the conductive portions 22 are disposed to pass through the through hole 50a, and in this case, the assembly method may include first assembling and fixing the terminal post 5 to the housing body 1, and then during the process of placing the plurality of cell assemblies 2 into the housing body 1, disposing the conductive portions 22 to pass through the through hole 50a.

In addition, the sequence of all operation steps after "fixing the housing cover 6 at the open end of the housing body 1" and "placing the plurality of cell assemblies 2 into the housing body 1" is not specifically limited.

Certainly, in other embodiments of the present application, the opening of the accommodating groove 50 may also be formed on the surface of the terminal post 5 facing the cell assembly 2. In this case, the conductive portions 22 and the terminal post 5 can also be fixed without providing the through hole 50a in the terminal post 5. For example, a part of the conductive portions 22 is overlapped with one side of the terminal post 5 facing the cell assembly 2, and the above part of the conductive portions 22 is fixed to the terminal post 5 by welding.

Referring to FIG. 10 and FIG. 11, in some embodiments of the present application, after the conductive portions 22 is fixedly connected to the terminal post 5, the assembly method further includes: fixedly disposing a cover plate 7 at the opening of the accommodating groove 50, such that the cover plate 7 seals the opening of the accommodating groove 50.

In the above technical solution, the cover plate 7 seals the opening of the accommodating groove 50, such that the leakage of the electrolyte in the housing body 1 from the opening of the accommodating groove 50 can be prevented. In addition, when the cover plate 7 is electrically connected to the terminal post 5, the cover plate 7 can be used to achieve an indirect electrical connection between the terminal post 5 and the busbar, which is beneficial to increasing the connection area of the electrical connection position, thereby reducing the resistance at the electrical connection position.

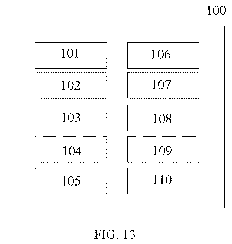

In a second aspect, the embodiments of the present application provide an assembly device 100. As shown in FIG. 13, the assembly device 100 is configured to assemble a battery cell 10. The battery cell 10 includes a housing body 1 and a plurality of cell assemblies 2 accommodated in the housing body 1, the plurality of cell assemblies 2 are connected in series and/or in parallel, and then the plurality of cell assemblies 2 of the battery cell 10 may be connected in series, in parallel, or series-parallel. The series-parallel connection means that both series connection and parallel connection are present for the connection among the plurality of cell assemblies 2. Each of the cell assemblies 2 includes an active substance-coated portion 21 and a conductive portion 22. The active substance-coated portion 21 is a portion of the cell assembly 2 that is coated with an active substance, and can assist in the deintercalation of metal ions during the charging and discharging processes of the battery cell 10. The conductive portion 22 is located at one end of the cell assembly 2 in the first direction, and the conductive portion 22 is configured to electrically connect the active substance-coated portion 21 to the terminal post 5 of the battery cell 10, such that the conductive portion 22 may be a structure that electrically connects the active substance-coated portion 21 to the terminal post 5 and is not coated with an active substance.

The assembly device 100 includes a stacking tool 101 and a first fixing tool 102. The stacking tool 101 is configured to stack the plurality of cell assemblies 2 in the second direction, and the second direction is perpendicular to the first direction. The first fixing tool 102 is configured to fixedly connect the conductive portions 22 of the plurality of cell assemblies 2, such that the conductive portions 22 of the plurality of cell assemblies 2 are electrically connected. The assembly device 100 further includes a housing insertion tool 103, and the housing insertion tool 103 is configured to place the plurality of cell assemblies 2 into the housing body 1.

In the above technical solution, by arranging the stacking tool 101 to stack the plurality of cell assemblies 2 in the second direction, the occupied area of the plurality of cell assemblies 2 in subsequent conveyance and operation processes is reduced. When the second direction is an up-down direction, the lowermost cell assembly 2 of the plurality of cell assemblies 2 is in contact with the logistics line, so as to reduce the risk of relative movement among the plurality of cell assemblies 2. Therefore, after the conductive portions 22 of the plurality of cell assemblies 2 are electrically connected, and when the plurality of cell assemblies 2 are conveyed on the logistics line, the risk of tension on the interconnected conductive portions 22 of the plurality of cell assemblies 2 can be effectively reduced, thereby decreasing the risk of cracking in the conductive portions 22 and improving the reliability of the plurality of cell assemblies 2. Moreover, during the electrical connection and housing insertion operations of the plurality of cell assemblies 2, corresponding operations are performed while the plurality of cell assemblies 2 are maintained in the stacked state in the second direction, such that the relative postures of the plurality of cell assemblies 2 before the plurality of cell assemblies 2 are placed into the housing body 1 are consistent with the relative postures of the plurality of cell assemblies 2 after the plurality of cell assemblies are placed into the housing body 1. Therefore, during the assembly process of the battery cell 10, the assembly device 100 does not need to adjust the relative placement postures of the plurality of cell assemblies 2 before and after insertion into the housing, thereby simplifying the structure of the assembly device 100 and simplifying the assembly procedure of the battery cell 10.

For example, the housing insertion tool 103 brings the plurality of cell assemblies 2 stacked in the second direction and the housing body 1 closer to each other in the second direction, such that the plurality of cell assemblies 2 enter the housing body 1 through the open end of the housing body 1 until the housing insertion of the cell assemblies 2 are completed.

In some examples, the assembly device 100 in the embodiments of the present application may assemble the battery cell 10 by using the assembly method in the above embodiments of the present application.

Referring to FIG. 13, in some embodiments of the present application, the assembly device 100 further includes a gathering tool 104 and a second fixing tool 107. The gathering tool 104 is configured to gather the conductive portions 22 (for example, tabs 221) of the plurality of cell assemblies 2, such that parts of the conductive portions 22 of the plurality of cell assemblies 2 proximal to the active substance-coated portion 21 converge to form a first gathering portion 221a, and parts of the conductive portions 22 of the plurality of cell assemblies 2 distal to the active substance-coated portion 21 converge to form a second gathering portion 221b, where the first fixing tool 102 is configured to pre-connect the second gathering portion 221b.

In the above technical solution, the gathering tool 104 is disposed to converge the conductive portions 22 of the plurality of cell assemblies 2 to form the first gathering portion 221a and the second gathering portion 221b, thereby enabling the shaping of the plurality of conductive portions 22. Subsequent operations on the first gathering portion 221a and the second gathering portion 221b enable corresponding operations on the plurality of conductive portions 22, which is beneficial to improving assembly efficiency. Meanwhile, the second gathering portion 221b is pre-connected by the first fixing tool 102, such that the second gathering portion 221b is formed as an integrated structure, thereby reducing interlayer gaps among the plurality of tabs 221 in the second gathering portion 221b. For example, the plurality of tabs 221 are enabled to form a plate-like structure with certain rigidity, thereby enabling a direct or indirect electrical connection between the second gathering portion 221b and the terminal post 5, and facilitating subsequent operations.

Referring to FIG. 13, in some embodiments of the present application, the assembly device 100 further includes an auxiliary tool 105. The auxiliary tool 105 is adapted to be detachably connected to the second gathering portion 221b, and the auxiliary tool 105 is configured to drive the second gathering portion 221b to pass through the clearance hole 30 formed in the support 3, such that at least a part of the second gathering portion 221b extends to a side of the support 3 distal to the active substance-coated portion 21.

Illustratively, after the first fixing tool 102 pre-connects the second gathering portion 221b, the auxiliary tool 105 is connected to the second gathering portion 221b. The auxiliary tool 105 may pass through the clearance hole 30 from a side of the support 3 facing the active substance-coated portion 21 to a side of the support 3 distal to the active substance-coated portion 21, and continue to drive the second gathering portion 221b to pass through the clearance hole 30 until at least a part of the second gathering portion 221b extends, through the clearance hole 30, to a side of the support 3 distal to the active substance-coated portion 21. Subsequently, the auxiliary tool 105 is separated from the second gathering portion 221b.

In the above technical solution, the auxiliary tool 105 is disposed to drive the second gathering portion 221b to pass through the clearance hole 30 formed in the support 3, thereby facilitating the assembly of the second gathering portion 221b and the support 3 and the assembly of the active substance-coated portion 21 and the support 3. In addition, the auxiliary tool 105 is detachably connected to the second gathering portion 221b, such that after completing a corresponding operation, the auxiliary tool 105 can be separated from the second gathering portion 221b without affecting subsequent operations.

In the embodiments of the present application, the detachable mode between the auxiliary tool 105 and the second gathering portion 221b is not specifically limited.

In some embodiments, the assembly device 100 further includes an assembly tool, and the assembly tool is configured to assemble the support 3 and the active substance-coated portion 21. Therefore, the support 3 encloses the outer peripheral sides of the plurality of active substance-coated portions 21.

Referring to FIG. 13, in some embodiments of the present application, the assembly device 100 further includes a coating tool 106 and a second fixing tool 107. The coating tool 106 is configured to coat the active substance-coated portion 21 with an insulating member 4, and the second fixing tool 107 is configured to fixedly connect the insulating member 4 to the support 3.

In the above technical solution, the coating tool 106 is disposed to coat the active substance-coated portion 21 with the insulating member 4, and the second fixing tool 107 is disposed to fix the insulating member 4 to the support 3, such that the coating reliability of the insulating member 4 is improved, and the insulating property between the plurality of cell assemblies 2 and the housing body 1 is improved, thereby enhancing the reliability of the battery cell 10. In addition, the insulating member 4 and the support 3 can provide certain protection to the plurality of cell assemblies 2, reducing the risk of the cell assemblies 2 being scratched by the housing body 1 during housing insertion of the plurality of cell assemblies 2.

It can be understood that, in the embodiments of the present application, if the battery cell 10 includes the support 3, the housing insertion tool 103 is configured to place the assembled plurality of cell assemblies 2 and the support 3 into the housing body 1 together. Further, the housing insertion tool 103 is configured to place the assembled plurality of cell assemblies 2, the support 3, and the insulating member 4 into the housing body 1 together. If the battery cell 10 does not include the support 3, the housing insertion tool 103 is configured to place the assembled plurality of cell assemblies 2 into the housing body 1 together. Further, the insulating member 4 is not fixed to the support 3, and the housing insertion tool 103 is configured to place the assembled plurality of cell assemblies 2 and the insulating member 4 into the housing body 1 together.

In some examples, the second fixing tool 107 and the first fixing tool 102 are integrated into one tool; or the second fixing tool 107 and the first fixing tool 102 are respectively configured as two separately disposed tools.

Referring to FIG. 13, in some embodiments of the present application, the assembly device 100 further includes a third fixing tool 108 and a fourth fixing tool 109. The third fixing tool 108 is configured to fix the housing cover 6 to the open end of the housing body 1, the third fixing tool 108 is configured to fixedly connect the conductive portions 22 to the terminal post 5, and the fourth fixing tool 109 is configured to assemble and fix the terminal post 5 to the housing body 1.

In the above technical solution, the third tool is disposed to fix the housing cover 6 to the housing body 1 and seal the open end of the housing body 1, so as to seal the plurality of cell assemblies 2 within an accommodating cavity defined by the housing body 1 and the housing cover 6, thereby achieving reliable encapsulation of the plurality of cell assemblies 2. Furthermore, the third fixing tool 108 can fixedly connect the conductive portions 22 to the terminal post 5 to achieve an electrical connection between the conductive portions 22 and the terminal post 5, thereby enabling normal charging and discharging of the battery cell 10. The fourth fixing tool 109 is disposed to fix the terminal post 5 to the housing body 1, so as to achieve the assembly of the terminal post 5 and the housing body 1.

In some examples, at least two of the first fixing tool 102, the second fixing tool 107, the third fixing tool 108, and the fourth fixing tool 109 may be integrated into one tool; or the first fixing tool 102, the second fixing tool 107, the third fixing tool 108, and the fourth fixing tool 109 are respectively configured as four separately disposed tools.

Referring to FIG. 13, in some embodiments of the present application, an accommodating groove 50 is formed on the terminal post 5, an opening of the accommodating groove 50 is formed on a surface of the terminal post 5 distal to the cell assembly 2, and a through hole 50a is formed on a wall of the accommodating groove 50 adjacent to the cell assembly 2. The assembly device 100 further includes a fifth fixing tool 110, and the fifth fixing tool 110 is configured to fix the cover plate 7 at the opening of the accommodating groove 50.

In the above technical solution, the fifth fixing tool 110 is disposed to fix the cover plate 7 at the opening of the accommodating groove 50, such that the cover plate 7 is fixed to the terminal post 5, and the cover plate 7 seals the opening of the accommodating groove 50, thereby preventing the leakage of the electrolyte in the housing body 1 from the opening of the accommodating groove 50.

In some examples, in the embodiments of the present application, any one of the first fixing tool 102, the second fixing tool 107, the third fixing tool 108, the fourth fixing tool 109, and the fifth fixing tool 110 may be a welding tool (for example, an ultrasonic welding tool).

In some examples, at least two of the first fixing tool 102, the second fixing tool 107, the third fixing tool 108, the fourth fixing tool 109, and the fifth fixing tool 110 may be integrated into one tool. Alternatively, the first fixing tool 102, the second fixing tool 107, the third fixing tool 108, the fourth fixing tool 109, and the fifth fixing tool 110 are respectively configured as five separately disposed tools.

Referring to FIG. 7, FIG. 10, and FIG. 11 again, the assembly method for a battery cell 10 according to specific embodiments of the present application is described.

In the embodiments of the present application, the battery cell 10 includes a housing body 1, two cell assemblies 2, a support 3, an insulating member 4, a terminal post 5, a housing cover 6, and a cover plate 7. For a single cell assembly 2, the cell assembly 2 includes an active substance-coated portion 21 and a conductive portion 22. The conductive portion 22 is disposed at one end of the active substance-coated portion 21 in a first direction, and two side walls of the cell assembly 2 in a second direction are first side walls 20, respectively. Each of the first side walls 20 is a side wall with the largest area among the plurality of side walls of the cell assembly 2. The first direction is a first horizontal direction, the second direction is a vertical direction, the third direction is a second horizontal direction, and the first horizontal direction is perpendicular to the second horizontal direction. The assembly method for the battery cell 10 includes the following steps:
S1, stacking two cell assemblies 2 in a second direction, the second direction being perpendicular to the first direction, where one first side wall 20 of one of the cell assemblies 2 and one first side wall 20 of the other cell assembly 2 are disposed face-to-face in the second direction, and the other first side wall 20 of the one of the cell assemblies 2 and the other first side wall 20 of the other cell assembly 2 are disposed back-to-back in the second direction;
S2, electrically connecting the conductive portions 22 of the two cell assemblies 2, including: converging a plurality of tabs 221 of the conductive portions 22 of the two cell assemblies 2, such that parts of the plurality of tabs 221 proximal to the active substance-coated portion 21 converge to form a first gathering portion 221a, and parts of the plurality of tabs 221 distal to the active substance-coated portion 21 converge to form a second gathering portion 221b, and pre-connecting the second gathering portion 221b;
S3, disposing the second gathering portion 221b to pass through the clearance hole 30 formed in the support 3 in the first direction, such that at least a part of the second gathering portion 221b extends to a side of the support 3 distal to the active substance-coated portion 21 in the first direction, and enclosing, by the support 3, two sides of the two cell assemblies 2 in the second direction and two sides of the two cell assemblies 2 in the third direction;
S4, wrapping the active substance-coated portion 21 with the insulating member 4, and connecting the insulating member 4 to the support 3;
S5, placing the plurality of cell assemblies 2 into the housing body 1, where, in this case, the housing body 1 has been assembled and fixed to the terminal post 5, and the conductive portion 22 is disposed to pass through the through hole 50a on the terminal post 5; and
S6, fixing the housing cover 6 at the open end of the housing body 1, such that the housing cover 6 seals the open end of the housing body 1, fixedly connecting the conductive portions 22 to the terminal post 5, and fixedly disposing the cover plate 7 at the opening of the accommodating groove 50, thereby achieving an electrical connection between the cover plate 7 and the terminal post 5. In step S6, the sequence of fixedly connecting the housing cover 6 to the housing body 1, fixedly connecting the conductive portions 22 to the terminal post 5, and fixedly connecting the cover plate 7 to the terminal post 5 is not specifically limited. In Example I, the housing cover 6 is first fixedly connected to the housing body 1, then the conductive portions 22 are fixed to the terminal post 5, and then the cover plate 7 is fixed to the terminal post 5; in Example II, the conductive portions 22 are first fixed to the terminal post 5, then the cover plate 7 is fixed to the terminal post 5, and then the housing cover 6 is fixed to the housing body 1; in Example III, the cover plate 7 is first fixed to the terminal post 5, then the conductive portions 22 are fixed to the terminal post 5, and then the housing cover 6 is fixed to the housing body 1; in Example IV, the housing cover 6 is first fixedly connected to the housing body 1, then the cover plate 7 is fixed to the terminal post 5, and the conductive portions 22 are fixed to the terminal post 2.

In the above technical solution, during the entire assembly process, the two cell assemblies 2 are maintained in a stacked state in the second direction, which facilitates reduction of the layout of the assembly section (i.e., reducing the space occupied by the layout of the assembly section, thereby decreasing the assembly space required during the assembly process), and improving the assembly line efficiency. During the assembly process, the postures of the two cell assemblies 2 are not required to be adjusted and flipped, thereby simplifying the assembly process and improving the assembly efficiency. The support 3 can provide certain support and limiting effects on the conductive portions 22, such that procedures such as attaching a PET film (or called a polyester film) on the conductive portions, welding, and dispensing can be dispensed with.

It should be noted that the embodiments and features of the embodiments in the present application may be combined with each other without conflict.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. An assembly method, for assembling a battery cell, wherein the battery cell comprises a housing body and a plurality of cell assemblies accommodated in the housing body and connected in series and/or in parallel, each of the cell assemblies comprises an active substance-coated portion and a conductive portion, and the conductive portion is located at one end of the cell assembly in a first direction and is configured to electrically connect the active substance-coated portion to a terminal post of the battery cell,
the assembly method comprising:
stacking the plurality of cell assemblies in a second direction, the second direction being perpendicular to the first direction;
electrically connecting the conductive portions of the plurality of cell assemblies; and
placing the plurality of cell assemblies into the housing body.

2. The assembly method according to claim 1, wherein the cell assembly has a plurality of side walls, and the side wall with the largest area in the plurality of side walls is a first side wall; and
stacking the plurality of cell assemblies in the second direction comprises:
disposing the first side walls of two adjacent cell assemblies back-to-back and/or face-to-face in the second direction.

3. The assembly method according to claim 1 or 2, wherein electrically connecting the conductive portions of the plurality of cell assemblies comprises:
converging a plurality of tabs of the conductive portions of the plurality of cell assemblies, such that parts of the plurality of tabs proximal to the active substance-coated portion converge to form a first gathering portion, and parts of the plurality of tabs distal to the active substance-coated portion converge to form a second gathering portion; and pre-connecting the second gathering portion.

4. The assembly method according to claim 3, wherein after pre-connecting the second gathering portion and before placing the plurality of cell assemblies into the housing body, the assembly method further comprises:
disposing the second gathering portion to pass through a clearance hole formed in a support, such that at least a part of the second gathering portion extends to a side of the support distal to the active substance-coated portion, and enclosing, by the support, outer peripheral sides of the plurality of cell assemblies.

5. The assembly method according to claim 3, wherein the conductive portion further comprises an adapting piece, and after pre-connecting the second gathering portion and before placing the plurality of cell assemblies into the housing body, the assembly method further comprises:
fixedly connecting the adapting piece to the second gathering portion, and disposing the adapting piece and the second gathering portion to pass through a clearance hole formed in a support, such that at least a part of the second gathering portion and the adapting piece extend to a side of the support distal to the active substance-coated portion, and enclosing, by the support, outer peripheral sides of the plurality of cell assemblies; or
disposing the second gathering portion to pass through a clearance hole formed in a support, such that at least a part of the second gathering portion extends to a side of the support distal to the active substance-coated portion, and enclosing, by the support, outer peripheral sides of the plurality of cell assemblies, and fixing the adapting piece to the at least a part of the second gathering portion.

6. The assembly method according to claim 4 or 5, wherein before placing the plurality of cell assemblies into the housing body, the assembly method further comprises:
wrapping the active substance-coated portion with an insulating member, and connecting the insulating member to the support.

7. The assembly method according to any one of claims 1 to 6, wherein after placing the plurality of cell assemblies into the housing body, the assembly method further comprises:
fixedly disposing a housing cover to an open end of the housing body, such that the housing cover seals the open end of the housing body; and
fixedly connecting the conductive portions to the terminal post.

8. The assembly method according to claim 7, wherein an accommodating groove is formed in the terminal post, an opening of the accommodating groove is formed on a surface of a side of the terminal post distal to the cell assembly, and a through hole is formed on a wall of the accommodating groove adjacent to the cell assembly,
the assembly method comprising:
assembling and fixing the terminal post to the housing body; and
disposing the conductive portions to pass through the through hole.

9. The assembly method according to claim 8, wherein after fixedly connecting the conductive portions to the terminal post, the assembly method further comprises:
fixedly disposing the cover plate at the opening of the accommodating groove, such that a cover plate seals the opening of the accommodating groove.

10. An assembly device, for assembling a battery cell, wherein the battery cell comprises a housing body and a plurality of cell assemblies accommodated in the housing body and connected in series and/or in parallel, each of the cell assemblies comprises an active substance-coated portion and a conductive portion, and the conductive portion is located at one end of the cell assembly in a first direction and is configured to electrically connect the active substance-coated portion to a terminal post of the battery cell,
the assembly device comprising:
a stacking tool, configured to stack the plurality of cell assemblies in a second direction, the second direction being perpendicular to the first direction;
a first fixing tool, configured to fixedly connect the conductive portions of the plurality of cell assemblies; and
a housing insertion tool, configured to place the plurality of cell assemblies into the housing body.

11. The assembly device according to claim 10, further comprising:
a gathering tool, configured to gather the conductive portions of the plurality of cell assemblies, such that parts of the conductive portions of the plurality of cell assemblies proximal to the active substance-coated portion converge to form a first gathering portion, and parts of the conductive portions of the plurality of cell assemblies distal to the active substance-coated portion converge to form a second gathering portion, wherein the first fixing tool is configured to pre-connect the second gathering portion.

12. The assembly device according to claim 11, further comprising:
an auxiliary tool, adapted to be detachably connected to the second gathering portion, and configured to drive the second gathering portion to pass through a clearance hole formed in the support, such that at least a part of the second gathering portion extends to a side of the support distal to the active substance-coated portion.

13. The assembly device according to claim 12, further comprising:
a coating tool, configured to coat the active substance-coated portion with an insulating member; and
a second fixing tool, configured to fixedly connect the insulating member to the support.

14. The assembly device according to any one of claims 10 to 13, further comprising:
a third fixing tool, configured to fix a housing cover to an open end of the housing body and fixedly connect the conductive portions to the terminal post; and
a fourth fixing tool, configured to assemble and fix the terminal post to the housing body.

15. The assembly device according to claim 14, wherein an accommodating groove is formed in the terminal post, an opening of the accommodating groove is formed on a surface of a side of the terminal post distal to the cell assembly, and a through hole is formed on a wall of the accommodating groove adjacent to the cell assembly,
the assembly device further comprising:
a fifth fixing tool, configured to fix a cover plate at the opening of the accommodating groove.
